# FASCICULE DE BREVET EUROPEEN

(11) **EP 1 919 657 B1**
(45) Date de publication et mention de la délivrance du brevet: **10.12.2008**
(21) Numéro de dépôt: 06794182.3
(22) Date de dépôt: 12.07.2006
(51) Int. Cl.: B23Q 11/08

(54) **PORTE SE TRANSFORMANT EN ESCALIER POUR L'ACCES A UNE MACHINE-OUTIL ET MACHINE-OUTIL EQUIPEE D'UNE TELLE PORTE**
IN EINE TREPPE UMWANDELBARE TÜR ZUM ZUGANG ZU EINER WERKZEUGMASCHINE UND MIT DER TREPPE VERSEHENE WERKZEUGMASCHINE
DOOR TRANSFORMABLE INTO A STAIR FOR ACCESSING TO A MACHINE TOOL AND A MACHINE TOOL PROVIDED WITH SAID STAIR

(30) Priorité: 04.08.2005 FR 0508306
(43) Date de publication de la demande: 14.05.2008
(73) Titulaire: Thibaut, 14500 Vire (FR)
(72) Inventeur: THIBAUT, Jacques, F-14500 Vaudry (FR); THIBAUT, Christophe, F-14500 Vire (FR)
(74) Mandataire: Poupon, Michel
(86) Numéro de dépôt international: PCT/FR2006/001735
(87) Numéro de publication internationale: WO 2007/017567

(56) Documents cités:
- FR-A- 2 752 409
- US-A- 2 453 937

## Description

La présente invention concerne une porte se transformant en escalier pour l'accès à une machine-outil, ainsi qu'une machine-outil équipée d'une telle porte.

Les machines-outils à commande numérique, notamment celles destinées au travail du granit et du marbre, obligent l'opérateur à accéder régulièrement à la machine-outil pour atteindre le poste de travail au cours des différentes phases d'usinage de la pièce. L'accès à la table de travail peut être imposé pour des opérations telles que :
- la mise en place des moyens de bridage (principalement des ventouses),
- le chargement de la pièce à usiner,
- l'accès au magasin d'outils,
- le déchargement de la pièce,
- une intervention éventuelle entre deux opérations,
- le nettoyage du poste de travail.

Par ailleurs, les hauteurs de table sont généralement de 700 millimètres par rapport au sol, de manière à optimiser la position de travail lors du raccordement des ventouses de bridage. Cette hauteur ergonomique ne facilite pas pour autant l'accès pour l'opérateur à la table de travail. Celui-ci doit souvent utiliser un marche-pied. Or l'utilisation d'un tel élément n'est pas toujours pratique pour des raisons d'encombrement. De plus, deux opérateurs sont généralement nécessaires pour le déchargement des pièces usinées, à cause de leur fragilité et de leur poids, d'où la nécessité d'un accès facile, sécurisé et escamotable à la table de travail.

Pour des raisons de sécurité, la configuration des machines-outils est telle que leur porte avant permettant l'accès au poste de travail est fermée et bloquée lors du fonctionnement en cycle automatique de la machine-outil.

Dans certains types de machines-outils, notamment celles à commande numérique, l'eau utilisée pour l'usinage est recyclée, d'où la nécessité d'une porte avant qui limite les projections et les pertes d'eau.

L'invention se propose de remédier aux inconvénients précités en proposant une porte avant d'une machine-outil, qui facilite l'accès à la table de travail tout en assurant une sécurité optimale pour l'opérateur et la retenue des projections d'eau.

A cet effet, la présente invention a pour objet une porte de machine-outil selon la revendication 1.

On comprendra mieux l'invention en référence aux dessins annexés sur lesquels :

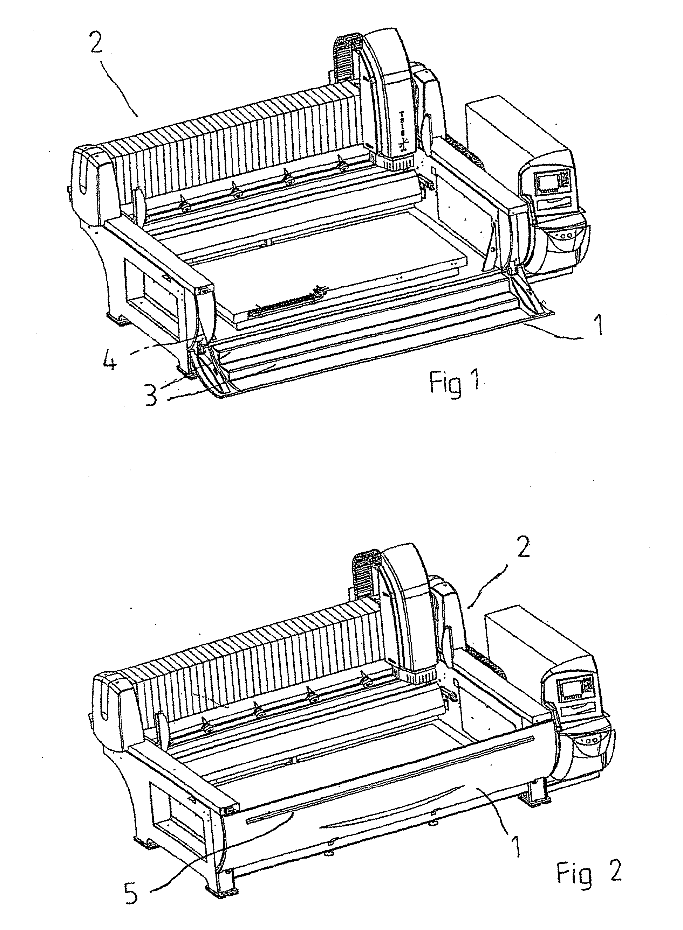

- la figure 1 est une représentation de la machine-outil équipée de la porte, en position ouverte,
- la figure 2 est la machine-outil équipée de la porte, en position fermée,

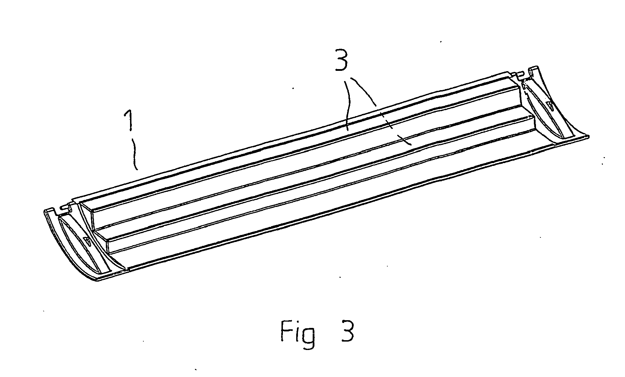

- la figure 3 est une représentation détaillée de la porte.

La porte (1), constituée de marches d'escaliers (3), est montée sur l'avant de la machine-outil (2), du côté du poste de travail de manière à faciliter son accès. Elle est montée pivotante à l'aide de deux paliers fixés sur le bâti de la machine-outil (2)

Son ouverture et sa fermeture sont contrôlées par deux vérins qui actionnent un câble de levage (4), et sont dépendantes du fonctionnement de la machine-outil (2). L'ouverture de la porte (1) n'est permise que lorsque la machine-outil (2) n'est pas en fonctionnement. Elle est bloquée lors du fonctionnement en cycle automatique de la machine-outil (2).

Un dispositif de contrôle de la position de la tige des vérins permet de stopper automatiquement la machine en cas d'ouverture lors du cycle automatique, afin d'assurer la sécurité de l'opérateur. Le principe de fermeture permet également de fermer la porte (1) uniquement quand les marches (3) des escaliers sont dégagées, de manière à optimiser la sécurité de l'opérateur et d'éviter toute fermeture intempestive de la porte (1) de la machine-outil (2).

Les marches (3) constitutives de la porte (1) sont munies d'un dispositif anti-dérapant de manière à limiter les risques de glissade et de chute de l'opérateur.

La porte (1) est munie sur sa face extérieure d'un profil en caoutchouc (5), destiné à constituer un point d'appui sur le sol, de manière à compenser les irrégularités du sol devant la machine-outil (2).

La porte (1) est réalisée préférentiellement en polyester armé de fibre de verre, assurant ainsi une légèreté, une rigidité et une résistance à la corrosion. Sa forme sera telle qu'elle s'adapte à la face avant des machines-outils auxquelles elle se destine.

En position ouverte, la porte, avec ses marches, permet l'accès au poste de travail, sans encombrer ce dernier.

En position fermée, la porte bloque l'accès au poste de travail et retient toutes les projections qui pourraient être liées à l'usinage de la pièce.

La porte avant selon l'invention facilite l'accès à la table de travail grâce à ses marches intégrées sur toute la longueur de la porte.

Par ailleurs, la porte avant assure la sécurité de l'opérateur lors du fonctionnement de la machine-outil en mode automatique, dans la mesure où l'accès en est interdit et que la porte reste fermée.

La porte et les marches dont elle est munie ne représentent aucun encombrement pour l'opérateur et lui enlèvent même tout obstacle devant le poste de travail. L'encombrement devant la machine-outil est également réduit.

## Revendications

1. Porte (1) de machine-outil (2) disposée à l'avant de cette dernière du côté du poste de travail, **caractérisée en ce qu'**elle est munie de marches (3) sur toute sa longueur autorisant l'accès au poste de travail de ladite machine-outil (2), lorsqu'elle est en position basculée et lorsque la machine-outil (2) n'est pas en fonctionnement, son ouverture et sa fermeture étant activées par deux vérins actionnant un câble de levage (4).

2. Porte (1) de machine-outil (2) selon la revendication 1, **caractérisée en ce qu'**elle est montée pivotante au moyen de deux paliers fixés sur la machine-outil (2).

3. Porte (1) de machine-outil (2) selon l'une des revendications précédentes, **caractérisée en ce qu'**un dispositif contrôle la position de la tige des vérins.

4. Porte (1) de machine-outil (2) selon l'une des revendications précédentes, **caractérisée en ce qu'**elle comporte un profil caoutchouc sur sa face extérieure en contact avec le sol en position ouverte.

5. Porte (1) de machine-outil (2) selon l'une des revendications précédentes, **caractérisée en ce qu'**elle est constituée de polyester armé de fibre de verre.

6. Porte (1) de machine-outil (2) selon l'une des revendications précédentes, **caractérisée en ce que** les marches (3) sont munies d'un dispositif anti-dérapant.

7. Machine-outil (2) avec porte selon l'une des revendications précédentes, **caractérisée en ce que** l'ouverture et la fermeture de sa porte (1) sont déterminées par le fonctionnement de ladite machine-outil (2).

## Claims

1. Door (1) of a machine tool (2) arranged at the front thereof on the work station side, **characterised in that** it is provided with steps (3) over its entire length allowing access to the work station of said machine tool (2) when it is in the tilted position and when the machine tool (2) is not in operation its opening and closing being activated by two jacks actuating a lifting cable (4).

2. Door (1) of a machine tool (2) according to Claim 1, **characterised in that** it is mounted so as to pivot by means of two bearings fixed on the machine tool (2).

3. Door (1) of a machine tool (2) according to any one of the preceding claims, **characterised in that** a device controls the position of the jack rod.

4. Door (1) of a machine tool (2) according to any one of the preceding claims, **characterised in that** it includes a rubber profile on its outer face in contact with the ground in the open position.

5. Door (1) of a machine tool (2) according to any one of the preceding claims, **characterised in that** it consists of glass-fibre reinforced polyester.

6. Door (1) of a machine tool (2) according to any one of the preceding claims, **characterised in that** the steps (3) are provided with an anti-slip device.

7. Machine tool (2) with a door according to any one of the preceding claims, **characterised in that** the opening and closing of its door (1) are determined by the operation of said machine tool (2).

## Patentansprüche

1. Tür (1) einer Werkzeugmaschine (2), die auf deren Vorderseite an der Seite des Arbeitsbereiches angeordnet ist, **dadurch gekennzeichnet, dass** sie mit Stufen (3) auf ihrer ganzen Länge versehen ist, die den Zugang zu dem Arbeitsbereich der Werkzeugmaschine (2) gestatten, wenn sie sich in gekippter Position befindet und die Werkzeugmaschine (2) nicht in Betrieb ist, wobei ihr Öffnen und ihr Schließen durch zwei Zylinder, die ein Hubseil (4) betätigen, bewirkt werden.

2. Tür (1) einer Werkzeugmaschine (2) nach Anspruch 1, **dadurch gekennzeichnet, dass** sie mittels zwei stationärer Lager, die an der Werkzeugmaschine (2) befestigt sind, schwenkbar installiert ist.

3. Tür (1) einer Werkzeugmaschine (2) nach einem der vorhergehenden Ansprüche, **dadurch gekennzeichnet, dass** eine Vorrichtung die Position der Kolbenstangen der Zylinder steuert.

4. Tür (1) einer Werkzeugmaschine (2) nach einem der vorhergehenden Ansprüche, **dadurch gekennzeichnet, dass** sie auf ihrer Außenseite ein Kautschukprofil aufweist, das in der offenen Stellung in Berührung mit dem Boden ist.

5. Tür (1) einer Werkzeugmaschine (2) nach einem der vorhergehenden Ansprüche, **dadurch gekennzeichnet, dass** sie aus einem mit Glasfaser verstärkten Polyester besteht.

6. Tür (1) einer Werkzeugmaschine (2) nach einem der vorhergehenden Ansprüche, **dadurch gekennzeichnet, dass** die Stufen (3) mit einer rutschhemmenden Einrichtung versehen sind.

7. Werkzeugmaschine (2) mit Tür nach einem der vorhergehenden Ansprüche, **dadurch gekennzeichnet, dass** das Öffnen und das Schließen der Tür (1) von dem Funktionieren der Werkzeugmaschine (2) bestimmt werden.
